# EUROPEAN PATENT APPLICATION

(11) **EP 4 661 525 A1**
(43) Date of publication of application: **10.12.2025**
(21) Application number: 23918933.5
(22) Date of filing: 30.01.2023
(51) Int. Cl.: H04W 64/00, H04W 4/02

(54) **GNSS VALIDITY PERIOD SENDING METHOD AND APPARATUS, DEVICE AND MEDIUM**

(71) Applicant: Beijing Xiaomi Mobile Software Co., Ltd., Beijing 100085 (CN)
(72) Inventor: JIANG, Xiaowei, Beijing 100085 (CN)
(74) Representative: Dehns Germany Partnerschaft mbB
(86) International application number: PCT/CN2023/073767
(87) International publication number: WO 2024/159342

(57) **Abstract**

The present application relates to the field of communications, and discloses a GNSS validity period sending method and apparatus, a device, a medium and a program product. The method is executed by a terminal device. The method comprises: when a first event occurs, triggering to send a GNSS validity period; and/or when a second event occurs, canceling the trigger to send the GNSS validity period. According to the method, when the first event occurs, sending the GNSS validity period is triggered, and/or when the second event occurs, triggering to send the GNSS validity period is canceled, so that the terminal device can report the GNSS validity period or cancel the reporting of the GNSS validity period when necessary, thereby helping a network device to determine the time for the terminal device to re-acquire GNSS positioning.

## Description

### TECHNICAL FIELD

The embodiments of the disclosure relate to a field of communication technology, in particular to a method for transmitting a global navigation satellite system (GNSS) validity duration, an apparatus for transmitting the GNSS validity duration, a device, a medium and a program product.

### BACKGROUND

GNSS position fix obtained by a user equipment (UE) has a validity duration, that is, a validity of the GNSS position fix can only be maintained for a period of time, and after that period of time expires, the GNSS position fix of the UE times out.

The UE need to reacquire the GNSS position fix. In related art, by reporting a GNSS validity duration, the UE facilitates a network device to decide the time for the UE to reacquire the GNSS position fix.

However, issues relating to how to trigger a transmission of the GNSS validity duration and how to cancel the triggering of the transmission of the GNSS validity duration remain to be solved.

### SUMMARY

The disclosure provides a method for transmitting a GNSS validity duration, an apparatus for transmitting a GNSS validity duration, a device, a medium and a program product. The technical solution at least includes the following contents.

According to a first aspect of embodiments of the disclosure, a method for transmitting a GNSS validity duration is provided. The method is performed by a UE, and includes:
in a case that a first event occurs, triggering a transmission of the GNSS validity duration; and/or,
in a case that a second event occurs, cancelling the triggering of the transmission of the GNSS validity duration.

According to a second aspect of embodiments of the disclosure, an apparatus for transmitting a GNSS validity duration is provided. The apparatus includes:
a processing module, configured to, in a case that a first event occurs, trigger a transmission of the GNSS validity duration; and/or,
in a case that a second event occurs, cancel the triggering of the transmission of the GNSS validity duration.

According to a third aspect of embodiments of the disclosure, a UE is provided. The UE includes:
a processor;
a transceiver connected to the processor; and
a memory for storing instructions executable by the processor;
in which the processor is configured to load and execute the instructions to implement the method for transmitting the GNSS validity duration according to the first aspect.

According to a fourth aspect of embodiments of the disclosure, a computer readable storage medium is provided. The computer readable storage medium stores at least one instruction, or at least one program, a set of codes or a set of instructions, and the at least one instruction, or the at least one program, the set of codes or the set of instructions is loaded and executed by a processor to cause the UE to execute the method for transmitting the GNSS validity duration according to the first aspect.

According to a fifth aspect of embodiments of the disclosure, a computer program product or a computer program is provided. The computer program product or the computer program includes a computer instruction, which is stored in a computer readable storage medium. A processor reads the computer instruction from the computer readable storage medium, and executes the computer instruction to cause the UE to execute the method for transmitting the GNSS validity duration according to the first aspect.

The technical solution provided by the embodiments of the disclosure includes the following beneficial effects.

In a case that the first event occurs, the transmission of the GNSS validity duration is triggered; and/or, in a case that the second event occurs, the triggering of the transmission of the GNSS validity duration is cancelled. Therefore, the UE may trigger the transmission of the GNSS validity duration or cancel the triggering of the transmission of the GNSS validity duration, to facilitate the network device to decide the time for the UE to reacquire the GNSS position fix.

### BRIEF DESCRIPTION OF THE DRAWINGS

In order to clearly illustrate technical solutions of the embodiments of the disclosure, a brief description of drawings used in the embodiments is given below. Obviously, the drawings in the following description are only part of the embodiments of the disclosure, and for those skilled in the art, other drawings can be obtained according to these drawings without inventive works.
FIG. 1 is a schematic diagram of a communication system provided by an example embodiment of the disclosure.
FIG. 2 is a schematic diagram of a Non-Terrestrial Network (NTN) system provided by an example embodiment of the disclosure.
FIG. 3 is a schematic diagram of another NTN system provided by an example embodiment of the disclosure.
FIG. 4 is a flowchart of a method for transmitting a GNSS validity duration provided by an example embodiment of the disclosure.
FIG. 5 is a block diagram of an apparatus for transmitting a GNSS validity duration provided by an example embodiment of the disclosure.
FIG. 6 is a schematic structural diagram of a UE provided by an example embodiment of the disclosure.

### DETAILED DESCRIPTION

In order to make the objectives, technical solutions and advantages of the disclosure more clear, the implementations of the disclosure will be further described in detail below with reference to the accompanying drawings.

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of example embodiments do not represent all implementations consistent with the disclosure. Instead, they are merely examples of apparatuses and methods consistent with aspects related to the disclosure as recited in the attached claims.

The terms used in the disclosure are only for the purpose of describing specific embodiments, and are not intended to limit the disclosure. The singular forms of "a" and "the" used in the disclosure and the attached claims are also intended to include plural forms, unless the context clearly indicates other meanings. It should also be understood that the term "and/or" as used herein refers to and includes any or all possible combinations of one or more associated listed items.

It should be noted that user information (including but not limited to UE information, user personal information, etc.) and data (including but not limited to data used for analysis, stored data, displayed data, etc.) involved in this application are all authorized by relevant users or fully authorized by all parties, and collection, use and processing of relevant data all comply with relevant laws, regulations and standards of relevant countries and regions.

It is understandable that although the terms "first" and "second" may be used in the disclosure to describe various types of information, the information should not be limited to these terms. These terms are only used to distinguish the same type of information from each other. For example, without departing from the scope of the disclosure, the first information may also be referred to as the second information, and similarly, the second information may also be referred to as the first information. Depending on the context, the term "if" as used herein may be interpreted as "when", "upon" or "in response to determining".

Firstly, some technical terms involved in this application will be introduced below.

### NTN (Non-Terrestrial Network) technology

Currently, relevant standard organizations are studying NTN technology, which provides communication services to users on earth through satellites (or drones) instead of terrestrial base stations. Compared with terrestrial cellular communication networks, satellite communication has many unique advantages. Firstly, satellite communication is not subject to the geographical limitations of users, for example, general terrestrial communication cannot cover areas such as oceans, mountains and deserts, etc., where it is not possible to set up communications equipment or where communication coverage is not provided due to the scarcity of the population, while for satellite communication, a satellite can cover a large area of the ground together with the fact that satellite can make orbital movement around the Earth, so theoretically every corner of the Earth can be covered by the satellite communication. Secondly, satellite communication has great social value. Satellite communication is provided for users in remote mountainous areas, poor and least developed countries or regions at a relatively low cost, allowing people in these areas to enjoy advanced voice communications and mobile Internet technologies, which is conducive to narrowing the digital divide with developed regions and promoting the development of these regions. Thirdly, despite the long distance of satellite communications, the cost of communication does not increase significantly as the communication distance increases. Finally, satellite communication has a high stability and is not subject to natural disasters.

Communication satellites are divided into Low-Earth Orbit (LEO) satellites, Medium-Earth Orbit (MEO) satellites, Geosynchronous Earth Orbit (GEO) satellites, High Elliptical Orbit (HEO) satellites and so on according to their orbital heights. The current stage mainly focuses on LEO and GEO.

### 1. LEO

For LEO satellite, its altitude ranges from 300km to 1500km, and the corresponding orbital period is approximately 1.5 hours to 2 hours. A signal propagation delay of single-hop communication between users is generally less than 20ms. The maximum satellite visibility time is 20mins. The signal propagation distance is short, the link loss is low, and the transmit power requirements for UEs is not high.

### 2. GEO

GEO satellite orbits around the Earth at an altitude of 35786km in a rotation period of 24 hours. A signal propagation delay of single-hop communication between users is generally 250ms.

Satellite altitude ranges, Orbits and satellite coverage for typical NTN networks are given in Table 1.

**Table 1**

| Platform | Altitude range | Orbit | Typical beam footprint size |
|---|---|---|---|
| LEO satellite | 300-1500 km | Circular around the earth | 100-1000 km |
| MEO satellite | 7000-25000 km | | 100-1000 km |
| GEO satellite | 35786 km | notional station keeping position fixed in terms of elevation/azimuth with respect to a given earth point | 200-3500 km |
| Unmanned Aircraft System (UAS) platform (including High Altitude Platform System (HAPS)) | 8-50 km (20 km for HAPS) | | 5-200 km |
| HEO satellite | 400-50000 km | Elliptical around the earth | 200-3500 km |

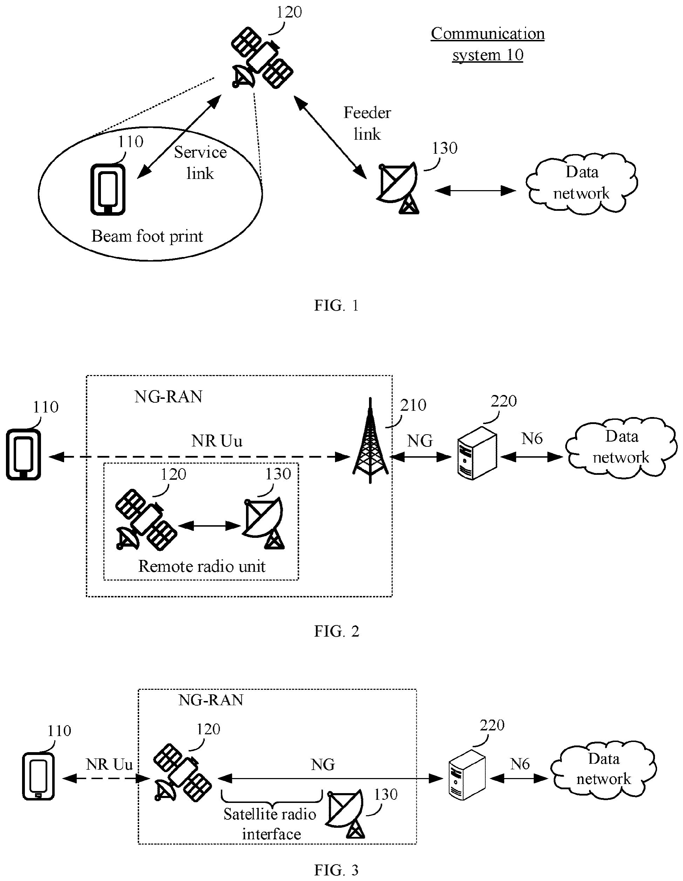

FIG. 1 is a schematic diagram of a communication system 10 provided by an example embodiment of the disclosure. The communication system 10 includes: a UE 110, a satellite 120, and an NTN gateway 130. The UE 110 communicates with the satellite 120 via a service link, the satellite 120 communicates with the NTN gateway 130 via a feeder link, and the NTN gateway 130 communicates with a data network.

Internet of Things (IoT) UE includes at least one of: a Bandwidth Reduction and Low Complexity UE (BL UE), a UE in Coverage Enhancement mode (UE in CE mode), or a narrow band IoT UE (NB-IOT UE).

In order to ensure satellite coverage as well as to improve a system capacity of the entire satellite communication system, satellites use multiple beams to cover the ground, a satellite can form dozens or even hundreds of beams to cover the ground, and a satellite beam can cover the ground area with a diameter of dozens to hundreds of kilometers to form a beam coverage area.

The embodiment of the disclosure may be applied to an NTN system, as illustrated in FIG. 2 and FIG. 3.

FIG. 2 is a schematic diagram of a NTN system provided by an example embodiment of the disclosure. A communication satellite in the NTN system adopts a transparent transmission mode. The NTN system includes: a UE 110, a satellite (or UAS platform) 120, a NTN gateway 130, an access network device 210 and a core network device 220. The satellite 120 and the NTN gateway 130 constitute a remote radio unit, and the remote radio unit and the access network device 210 constitute a Next Generation Radio Access Network (NG-RAN).

The UE 110 communicates with the access network device 210 through a New Radio (NR) Uu interface. In the architecture shown in FIG. 2, the access network device 210 is deployed on the ground, and uplink and downlink communications between the UE 110 and the access network device 210 may be relayed and transmitted via the satellite 120 and the NTN gateway 130 (usually located on the ground). The UE 110 communicates with the satellite 120, the satellite 120 communicates with the NTN gateway 130, and the NTN gateway 130 communicates with the access network device 210. The access network device 210 communicates with the core network device 220 via a NG interface, and the core network device 220 communicates with the data network via a N6 interface.

In the NTN system, the satellite 120 has the functions of frequency conversion and signal amplification. The satellite 120 does not demodulate signals of the access network device 210, but only converts the signals to the satellite frequency band for transmission. The satellite 120 is similar to a repeater.

FIG. 3 is a schematic diagram of another NTN system provided by an example embodiment of the disclosure. A communication satellite in the NTN system adopts a regeneration mode. The NTN system includes: a UE 110, a satellite 120, a NTN gateway 130 and a core network device 220. The satellite 120 and the NTN gateway 130 constitute an NG-RAN.

In the architecture shown in FIG. 3, the functions of the access network device 210 are integrated on the satellite 120, that is, the satellite 120 has the functions of the access network device 210. The UE 110 communicates with the satellite 120 via an NR Uu interface, the satellite 120 communicates with the NTN gateway 130 via a Satellite Radio Interface (SRI), the NTN gateway 130 communicates with the core network device 220 via a NG interface, and the core network device 220 communicates with a data network via a N6 interface. In the NTN system, the satellite 120 receives a signal, performs a regeneration process (demodulating-decoding-encoding-modulating) on the signal, and then transmits the regenerated signal through a satellite frequency band.

In the architectures shown in FIG. 2 and FIG. 3, the access network device 210 is a device for providing wireless communication services to the UE 110. A connection may be established between the access network device 210 and the UE 110, through which communications are realized, including signaling and data interaction. There may be multiple access network devices 210, and two adjacent access network devices 210 may communicate with each other in a wired manner or wirelessly. The UE 110 may switch between different access network devices 210, i.e., establish connections with different access network devices 210.

Taking a cellular communication network as an example, the access network device 210 in the cellular communication network may be a base station. The base station is a device deployed in an access network to provide a wireless communication function for the UE 110. The base station may include various forms of macro base stations, micro base stations, relay stations, access points, etc. In systems adopting different wireless access technologies, the device having the functions of the base station may be referred to by different names. For example, in a 5G NR system, it is called next Generation Node B (gNodeB (gNB)). As communication technology evolves, the name "base station" may change. For the convenience of description, in the embodiment of the disclosure, the above-mentioned devices that provide the wireless communication function for the UE 110 are collectively referred to as base station or access network device.

In addition, the UE 110 involved in the embodiment of the disclosure may include various handheld devices, vehicle-mounted devices, wearable devices, computing devices or other processing devices connected to a wireless modem that have wireless communication capabilities, as well as various types of UEs, Mobile Station (MSs), and terminals. For the convenience of description, in the embodiment of the disclosure, the above-mentioned devices are collectively referred to as UE. In the disclosure, sometimes, terminal may also be called UE. In the embodiment of the disclosure, the "network device" may be an access network device (e.g., a base station) or a satellite.

Taking the 5G NTN system as an example, the NTN system may include a plurality of satellites 120. One satellite 120 may cover a certain range of a ground area to provide wireless communication services for the UEs 110 within the ground area. In addition, the satellites 120 may make an orbital movement around the earth, and by deploying the plurality of satellites 120, communication coverage of different areas on the earth's surface may be achieved.

In the embodiment of the disclosure, the terms "network" and "system" are often used interchangeably, which is understood by those skilled in the art. The technical solution described in the embodiment of the disclosure is applicable to a Long Term Evolution (LTE) system, a 5G system, an evolved system of a 5G NR system or other communication systems, which is not limited by the disclosure.

For IOT terminals, some UEs do not support simultaneous GNSS reception and LTE transmission and reception. However, a validity of GNSS position fix obtained by a UE can only be maintained for a period of time, and after the period of the time is exceeded, the GNSS outdated position fix of the UE times out. The UE need to reacquire the GNSS position fix. Since the UE does not support simultaneous GNSS reception and LTE transmission and reception, only one of them can be performed. Currently, in related arts, the GNSS validity duration indicating a validity duration of the GNSS position fix is reported through a Medium Access Control Control Element (MAC CE), which may be a GNSS validity duration MAC CE, and its name is not limited by the disclosure.

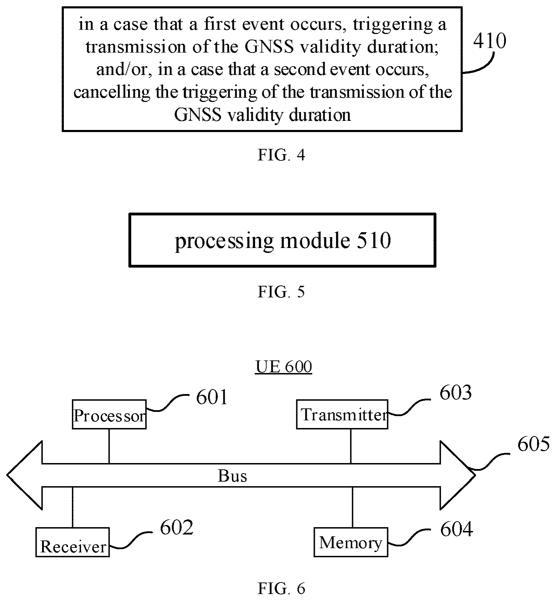

However, how to trigger a transmission of a GNSS validity duration and how to cancel the triggering of the transmission of the GNSS validity duration as still unclear. In view of this, the disclosure provides a method for transmitting a GNSS validity duration as shown in FIG. 4. FIG. 4 is a flowchart of a method for transmitting a GNSS validity duration provided by an example embodiment of the disclosure. The method is performed by a UE, and includes:
Step 410: in a case that a first event occurs, triggering a transmission of the GNSS validity duration; and/or, in a case that a second event occurs, cancelling the triggering of the transmission of the GNSS validity duration.

Before step 410, the UE may obtain a GNSS position fix, which has a validity duration. In a case that the GNSS validity duration ends, the GNSS position fix is determined to timeout, i.e., the GNSS position fix is not within the GNSS validity duration. It should be understood that the GNSS validity duration may be pre-configured by a GNSS system or agreed upon by a communication protocol, which is not limited in the disclosure.

In some embodiments, the GNSS validity duration is transmitted by reporting the MAC CE, and the GNSS validity duration indicates a duration where the GNSS position fix is maintained valid. The GNSS position fix is a position determined by the GNSS. The triggering of MAC CE may be to set a flag, and canceling the triggering may be to delete the flag, that is, the MAC CE will no longer be sent in the future. If the flag is not deleted, the MAC CE will be sent again later.

In some embodiments, the first event includes at least one of:
the UE in a connected state reacquiring the GNSS position fix;
the UE in the connected state has not reported the GNSS validity duration to a current serving cell; or
a difference between a current remaining GNSS validity duration of the UE and a previously reported GNSS validity duration is greater than a first value.

(1) In a case that the UE in the connected state reacquires the GNSS position fix, the transmission of the GNSS validity duration is triggered.

The connection state of the UE includes at least one of the following:
a connected state (RRC_CONNECTED);
an inactive state (RRC_INACTIVE); or
an idle state (RRC_IDLE).

The connected state indicates that a connection is established between the UE and the network device, and a connection is established between the network device and the core network for the UE. Data transmission can be performed at any time. This state does not require an establishment delay, and therefore has the shortest delay.

The inactive state indicates that no connection is established between the UE and the network device, but a connection is established between the network device and the core network for the UE. Once there is a need for data transmission to the UE, the network device will send a paging message. After receiving the paging message, the UE quickly establishes a connection with the network device, for example, a 10ms fast recovery, and the UE switches from the inactive state to the connected state.

The idle state indicates that no connection is established between the UE and the network device, and no connection is established between the network device and the core network for the UE. If there is a need for data transmission to the UE or the UE needs to send data, there is a huge delay, such as 100ms, for switching from the idle state to the connected state.

If the UE in the connected state has obtained the GNSS position fix, it needs to reacquire the GNSS position fix due to, for example, a GNSS position fix timeout.

The terminal device reacquires the GNSS position fix in at least one of the following ways:
performing GNSS measurement based on a request from the network device to obtain the GNSS position fix; or
performing GNSS measurement to obtain the GNSS position fix by itself.

For example, the network device instructs the UE to perform the GNSS measurement through a Radio Resource Control (RRC) dedicated message. The UE performs the GNSS measurement after receiving an instruction from the network device.

The UE receives a first indication sent by the network device through the RRC dedicated message. The first indication indicates the UE to perform the GNSS measurement, or the first indication indicates the UE not to perform the GNSS measurement. The UE obtains the GNSS position fix in response to instructing the UE to perform the GNSS measurement in the first indication.

The triggering of MAC CE may be to set a flag to indicate that a MAC CE needs to be sent. After the triggering, the UE will only send the MAC CE when there are available Uplink (UL) resources.

In a case that the UE in the connected state re-acquires the GNSS position fix, the transmission of the GNSS validity duration is triggered, and the GNSS validity duration is transmitted by reporting the MAC CE.

(2) In a case that the UE in the connected state has not reported the GNSS validity duration to the current serving cell, the transmission of the GNSS validity duration is triggered.

A cell, also known as a cellular cell, refers to an area covered by a base station or a part of the base station (i.e., a sector antenna) in a cellular mobile communication system. In this area, the UE communicates with a base station through a wireless channel.

A serving cell is a cell that exchanges data with the UE. There may be one or more serving cells. For example, in a carrier aggregation scenario, if two carriers are used for transmission, there are two serving cells.

The triggering of MAC CE may be set a flag to indicate that a MAC CE needs to be sent. After the triggering, the UE will only send the MAC CE when there are available UL resources.

In a case that the UE in the connected state has not reported the GNSS validity duration to the current serving cell, the transmission of the GNSS validity duration is triggered. In an embodiment of the disclosure, the UE switches from a cell 1 to a cell 2, since the UE in the connected state has not reported the GNSS validity duration to the current serving cell (i.e. the cell 2), the transmission of the GNSS validity duration is triggered, and the GNSS validity duration is sent by the MAC CE.

(3) In a case that the difference between the current remaining GNSS validity duration of the UE and the previously reported GNSS validity duration is greater than the first value, the transmission of the GNSS validity duration is triggered.

In a case that a difference between the current remaining GNSS validity duration of the UE and the previously reported GNSS validity duration is greater than a second value, the transmission of the GNSS validity duration is triggered; or,

In a case that a ratio of the current remaining GNSS validity duration of the UE to the previously reported GNSS validity duration is greater than a third value, the transmission of the GNSS validity duration is triggered.

The first value includes at least one of the second value or the third value. In an embodiment of the disclosure, the second value is 5 seconds, the current remaining GNSS validity duration of the UE is 10 seconds, and the previously reported GNSS validity duration is 20 seconds, and thus the difference between the current remaining GNSS validity duration of the UE and the previously reported GNSS validity duration is 20-10=10 seconds, which is greater than the second value, and the transmission of the GNSS validity duration is triggered and the GNSS validity duration is transmitted by reporting the MAC CE.

Or, the third value is 50%, the current remaining GNSS validity duration of the UE is 7 seconds, and the latest reported GNSS validity duration is 10 seconds, and thus a ratio of the current remaining GNSS validity duration of the UE to the latest reported GNSS validity duration is 70%, which is greater than the third value (i.e., 70%>50%), and the transmission of the GNSS validity duration is triggered and the GNSS validity duration is sent by the MAC CE.

The triggering of MAC CE may be configuring a flag to a MAC CE that needs to be sent. After the triggering, the UE will only send the MAC CE when there are available UL resources.

In some embodiments, the second event includes at least one of the following:
MAC reset is performed;
MAC protocol data unit (PDU) is generated;
the transmission of the GNSS validity duration starts;
the transmission of the GNSS validity duration is completed; or
the GNSS validity duration is transmitted through an RRC connection reconfiguration complete message.

(1) In the case that the MAC reset is performed, the triggering of the transmission of the GNSS validity duration is cancelled.

A MAC layer includes multiplexing and demultiplexing entities and logical channel priority entities. The multiplexing and demultiplexing entities may be responsible for composing and decomposing a MAC PDU and performing multiplexing and demultiplexing of data from several logical channels to/from one transmission channel. When allocating radio resources for new transmissions, the logical channel priority entities may indicate the multiplexing and demultiplexing entities to generate the MAC PDU from a MAC Service Data Unit (SDU).

The triggering of MAC CE may be setting a flag, and cancelling the triggering may be deleting the flag, that is, the MAC CE will no longer be sent. If the flag is not deleted, the MAC CE will be sent in the future.

In a case that the UE operates abnormally, it is necessary to reset the MAC layer and clear all previous states. In case of performing the MAC reset, the UE cancels the triggering of MAC CE, that is, cancels the triggering of the transmission of the GNSS validity duration.

(2) In the case that the MAC PDU is generated, the triggering of the transmission of the GNSS validity duration is cancelled.

The MAC PDU is a MAC layer PDU, which is composed of character strings arranged in bytes (8 bits). The character strings are read from left to right and from top to bottom. One MAC PDU includes a MAC CE and at least one of a MAC header, a MAC SDU or a padding portion. The MAC header includes one or more MAC sub headers. Each MAC sub header corresponds to a MAC PDU, a MAC CE or a padding portion.

The triggering of MAC CE may be setting a flag, and cancelling the triggering may be deleting the flag, that is, the MAC CE will no longer be sent. If the flag is not deleted, the MAC CE will be sent in the future.

The MAC PDU includes at least one of the following basic types:
a data transmission MAC PDU;
a transparent transmission MAC PDU;
a random access response MAC PDU; or
a MAC CE.

The MAC CE used to transmit the GNSS validity duration may be a GNSS validity duration MAC CE, and the MAC PDU includes a first GNSS validity duration MAC CE. In a case that the UE generates the MAC PDU, for all GNSS validity duration MAC CEs including the first GNSS validity duration MAC CE, the triggering of transmission is cancelled, i.e., the triggering of the transmission of the GNSS validity duration is canceled.

(3) In the case that the transmission of the GNSS validity duration starts, the triggering of the transmission of the GNSS validity duration is cancelled.

The triggering of MAC CE may be setting a flag, and cancelling the triggering may be deleting the flag, that is, the MAC CE will no longer be sent. If the flag is not deleted, the MAC CE will be sent in the future.

The MAC CE used for transmitting the GNSS validity duration may be a GNSS validity duration MAC CE, and the transmission process of the GNSS validity duration MAC CE includes at least one of starting the transmission or completing the transmission. In a case of the transmission of the GNSS validity duration MAC CE starts, the transmissions of all GNSS validity duration MAC CEs are cancelled, that is, the triggering of the transmission of the GNSS validity duration is canceled.

(4) In the case that the transmission of the GNSS validity duration is completed, the triggering of the transmission of the GNSS validity duration is cancelled.

The triggering of MAC CE may be setting a flag, and cancelling the triggering may be deleting the flag, that is, the MAC CE will no longer be sent. If the flag is not deleted, the MAC CE will be sent in the future.

The MAC CE used for transmitting the GNSS validity duration may be a GNSS validity duration MAC CE, and the transmission process of the GNSS validity duration MAC CE includes at least one of starting the transmission or completing the transmission. In a case that the transmission of the GNSS validity duration MAC CE is completed, the transmissions of all GNSS validity duration MAC CEs are cancelled, that is, the triggering of the transmission of the GNSS validity duration is canceled.

The transmission of the GNSS validity duration MAC CE is completed, includes at least one of the following:
a feedback indicating that the transmission of the GNSS validity duration MAC CE is completed is received from the network device; or
a Hybrid Automatic Repeat Request (HARQ) process used by the UE to transmit the GNSS validity duration MAC CE is scheduled for a new transmission.

HARQ is a technology that combines Forward Error Correction (FEC) and an Automatic Repeat-reQuest (ARQ) method.

FEC, by adding redundant information, may enable the UE to correct a portion of errors, thereby reducing the number of retransmissions.

For errors that FEC cannot correct, the UE, as a transmitter, will request the network device to send data again through an ARQ mechanism. The UE uses an error detection code, usually a Cyclic Redundancy Check (CRC) check, to detect whether the received data is correct. If there is no error, the UE will send a positive acknowledgement (ACK) message to the network device as a receiver. After receiving the ACK message, the network device will then continue to send the following data. If there is an error, the UE will discard the data and send a negative acknowledgement (NACK) message to the network device. After receiving the NACK, the network device will send the same data again.

HARQ uses a stop-and-wait protocol to send data. In the stop-and-wait protocol, the UE, as the transmitter, sends a Transport Block (TB) and then stops to wait for an acknowledgement message. The network device, as the receiver, will use 1-bit information for ACK or NACK of the TB. However, the UE stops to wait for confirmation after each transmission, which will lead to a low throughput. Therefore, the LTE performs several parallel stop-and-wait processes. When it is waiting for confirmation for one HARQ process, the UE can use another HARQ process to continue to send data.

In the case that the HARQ process used by the UE to transmit the GNSS validity duration is scheduled for the new data transmission, it indicates that the transmission of the GNSS validity duration MAC CE is completed.

In some embodiments, if the transmission of the GNSS validity duration MAC CE is not completed, the triggering of the transmission of the GNSS validity duration is not cancelled, and the transmission of the GNSS validity duration is continued to be reported.

(5) In the case that the GNSS validity duration is transmitted through the RRC connection reconfiguration complete message, the triggering of the transmission of the GNSS validity duration is cancelled.

The triggering of MAC CE may be setting a flag, and cancelling the triggering may be deleting the flag, that is, the MAC CE will no longer be sent. If the flag is not deleted, the MAC CE will be sent in the future.

The network device sends an RRC connection reconfiguration message to the UE, which may carry at least one of radio resource configuration information, modification control information or test configuration information.

The UE receives the RRC connection reconfiguration message, and sends an RRC connection reconfiguration complete message to the network device after the configuration is completed. After the GNSS validity duration is transmitted through the RRC connection reconfiguration complete message, the GNSS validity duration will no longer be transmitted through the MAC CE, and the triggering of the transmission of the GNSS validity duration through the MAC CE is cancelled.

The above-mentioned methods for triggering the transmission of the GNSS validity duration and the methods for canceling the triggering of the transmission of the GNSS validity duration may be combined, which is not limited by the disclosure. Those skilled in the art can flexibly combine the above-mentioned methods for triggering the transmission of the GNSS validity duration and the methods for canceling the triggering of the transmission of the GNSS validity duration and improve the combinations.

In conclusion, according to the method provided by the embodiment, in the case that the first event occurs, the transmission of the GNSS validity duration is triggered; and/or, in the case that the second event occurs, the triggering of the transmission of the GNSS validity duration is cancelled. Therefore, the UE may trigger the transmission of the GNSS validity duration or cancel the triggering of the transmission of the GNSS validity duration, to facilitate the network device to decide the time for the UE to reacquire the GNSS position fix.

FIG. 5 is a block diagram of an apparatus for transmitting a GNSS validity duration provided by an example embodiment of the disclosure. The apparatus includes a processing module 510. The function of the processing module 510 is realized by a processor in the UE.

The processing module 510 is configured to: in a case that a first event occurs, trigger a transmission of the GNSS validity duration; and/or,
in a case that a second event occurs, cancel the triggering of the transmission of the GNSS validity duration.

In a possible design of the embodiment, the GNSS validity duration is transmitted by reporting a MAC CE, the GNSS validity duration is a duration where a GNSS position fix is maintained valid, and the GNSS position fix is a position determined by the GNSS.

In a possible design of the embodiment, the processing module 510 is configured to: in a case that the UE in a connected state reacquires the GNSS position fix, trigger the transmission of the GNSS validity duration.

In a possible design of the embodiment, the processing module 510 is configured to: in a case that the UE in a connected state has not reported the GNSS validity duration to a current serving cell, trigger the transmission of the GNSS validity duration.

In a possible design of the embodiment, the processing module 510 is configured to: in a case that a difference between a current remaining GNSS validity duration of the UE and a previously reported GNSS validity duration is greater than a first value, trigger the transmission of the GNSS validity duration.

In a possible design of the embodiment, the processing module 510 is configured to: in a case that a difference between the current remaining GNSS validity duration of the UE and the previously reported GNSS validity duration is greater than a second value, trigger the transmission of the GNSS validity duration; or,
in a case that a ratio of the current remaining GNSS validity duration of the UE to the previously reported GNSS validity duration is greater than a third value, trigger the transmission of the GNSS validity duration.

In a possible design of the embodiment, the processing module 510 is configured to: in a case that a MAC reset is performed, cancel the triggering of the transmission of the GNSS validity duration.

In a possible design of the embodiment, the processing module 510 is configured to: in a case that a MAC PDU is generated, cancel the triggering of the transmission of the GNSS validity duration.

In a possible design of the embodiment, the processing module 510 is configured to: in a case that the transmission of the GNSS validity duration starts, cancel the triggering of the transmission of the GNSS validity duration.

In a possible design of the embodiment, the processing module 510 is configured to: in a case that the transmission of the GNSS validity duration is completed, cancel the triggering of the transmission of the GNSS validity duration.

In a possible design of the embodiment, the processing module 510 is configured to: in a case that the GNSS validity duration is transmitted through a RRC connection reconfiguration completion message, cancel the triggering of the transmission of the GNSS validity duration.

FIG. 6 is a schematic structural diagram of a UE 600 provided by an example embodiment of the disclosure. The UE 600 includes: a processor 601, a receiver 602, a transmitter 603, a memory 604 and a bus 605.

The processor 601 includes one or more processing cores. The processor 601 executes various functional applications and information processing by running software programs and modules. In some embodiments, the processor 601 may be used to implement the functions and steps of the processing module 510 described above.

The receiver 602 and the transmitter 603 may be realized as a communication component. The communication component may be a communication chip and may be referred to as a transceiver.

The memory 604 is connected to the processor 601 through the bus 605.

The memory 604 is configured to store at least one instruction, and the processor 601 is configured to execute the at least one instruction to realize the steps in the above method embodiments.

In addition, the memory 604 may be implemented by any type of volatile or non-volatile storage devices or a combination thereof. The volatile or non-volatile storage devices include but are not limited to: a magnetic disk or an optical disk, an Electrically Erasable Programmable Read-Only Memory (EEPROM), an Erasable Programmable ROM (EPROM), a Static Random Access Memory (SRAM), an ROM, a magnetic memory, a flash memory, and a programmable ROM (PROM).

In some embodiments, the receiver 602 receives signals/data independently, or the processor 601 controls the receiver 602 to receive signals/data, or the processor 601 requests the receiver 602 to receive signals/data, or the processor 601 cooperates with the receiver 602 to receive signals/data.

In some embodiments, the transmitter 603 sends signals/data independently, or the processor 601 controls the transmitter 603 to send signals/data, or the processor 601 requests the transmitter 603 to send signals/data, or the processor 601 cooperates with the transmitter 603 to send signals/data.

In an example embodiment, a computer-readable storage medium is provided. The computer-readable storage medium stores at least one instruction, or at least one program, a set of codes or a set of instructions, and the at least one instruction, or the at least one program, the set of codes or the set of instructions is loaded and executed by a processor to implement the method for transmitting a GNSS validity duration provided in the above-mentioned method embodiments.

In an example embodiment, a computer program product or a computer program is provided. When the computer program product or the computer program is running on a processor, the UE is caused to execute the method for transmitting a GNSS validity duration provided in the above-mentioned method embodiments.

Those skilled in the art understand that all or part of the steps to implement the above embodiments may be accomplished by hardware or by instructing related hardware through a program. The program may be stored in a computer-readable storage medium, which may be a ROM, a disk or an optical disk, etc.

The above are only optional embodiments of the disclosure and are not intended to limit the disclosure. Any modifications, equivalent substitutions, improvements, etc. made within the spirit and principles of the disclosure should be included in the protection scope of the disclosure.

## Claims

1. A method for transmitting a global navigation satellite system (GNSS) validity duration, performed by a user equipment (UE), comprising:
in a case that a first event occurs, triggering a transmission of the GNSS validity duration; and/or,
in a case that a second event occurs, cancelling the triggering of the transmission of the GNSS validity duration.

2. The method of claim 1, wherein the GNSS validity duration is transmitted by reporting a medium access control control element (MAC CE), the GNSS validity duration is a duration where a GNSS position fix is maintained valid, and the GNSS position fix is a position determined by the GNSS.

3. The method of claim 2, wherein in the case that the first event occurs, triggering the transmission of the GNSS validity duration comprises:
in a case that the UE in a connected state reacquires the GNSS position fix, triggering the transmission of the GNSS validity duration.

4. The method of claim 2, wherein in the case that the first event occurs, triggering the transmission of the GNSS validity duration, comprises:
in a case that the UE in a connected state has not reported the GNSS validity duration to a current serving cell, triggering the transmission of the GNSS validity duration.

5. The method of claim 2, wherein in the case that the first event occurs, triggering the transmission of the GNSS validity duration, comprises:
in a case that a difference between a current remaining GNSS validity duration of the UE and a previously reported GNSS validity duration is greater than a first value, triggering the transmission of the GNSS validity duration.

6. The method of claim 5, wherein in the case that the difference between the current remaining GNSS validity duration of the UE and the previously reported GNSS validity duration is greater than the first value, triggering the transmission of the GNSS validity duration, comprises:
in a case that the difference between the current remaining GNSS validity duration of the UE and the previously reported GNSS validity duration is greater than a second value, triggering the transmission of the GNSS validity duration; or,
in a case that a ratio of the current remaining GNSS validity duration of the UE to the previously reported GNSS validity duration is greater than a third value, triggering the transmission of the GNSS validity duration.

7. The method of claim 2, wherein in the case that the second event occurs, cancelling the triggering of the transmission of the GNSS validity duration, comprises:
in a case that a medium access control (MAC) reset is performed, cancelling the triggering of the transmission of the GNSS validity duration.

8. The method of claim 2, wherein in the case that the second event occurs, cancelling the triggering of the transmission of the GNSS validity duration, comprises:
in a case that a MAC packet data unit (PDU) is generated, cancelling the triggering of the transmission of the GNSS validity duration.

9. The method of claim 2, wherein in the case that the second event occurs, cancelling the triggering of the transmission of the GNSS validity duration, comprises:
in a case that the transmission of the GNSS validity duration starts, cancelling the triggering of the transmission of the GNSS validity duration.

10. The method of claim 2, wherein in the case that the second event occurs, cancelling the triggering of the transmission of the GNSS validity duration, comprises:
in a case that the transmission of the GNSS validity duration is completed, cancelling the triggering of the transmission of the GNSS validity duration.

11. The method of claim 2, wherein in the case that the second event occurs, cancelling the triggering of the transmission of the GNSS validity duration, comprises:
in a case that the GNSS validity duration is transmitted through a radio resource control (RRC) connection reconfiguration completion message, cancelling the triggering of the transmission of the GNSS validity duration.

12. An apparatus for transmitting a global navigation satellite system (GNSS) validity duration, comprising:
a processing module, configured to, in a case that a first event occurs, trigger a transmission of the GNSS validity duration; and/or,
in a case that a second event occurs, cancel the triggering of the transmission of the GNSS validity duration.

13. A user equipment (UE), comprising:
a processor;
a transceiver connected to the processor; and
a memory for storing instructions executable by the processor;
wherein the processor is configured to load and execute the instructions to implement the method for transmitting the GNSS validity duration according to any one of claims 1-11.

14. A computer readable storage medium, wherein the computer readable storage medium stores a computer program, and the computer program is loaded and executed by a processor to implement the method for transmitting the GNSS validity duration according to any one of claims 1-11.

15. A computer program product, wherein the computer program product comprises a computer instruction, the computer instruction is stored in a computer readable storage medium, and a processor acquires the computer instruction from the computer readable storage medium, and loads and executes the computer instruction to implement the method for transmitting the GNSS validity duration according to any one of claims 1-11.
